(19) Europäisches Patentamt
European Patent Office
Office européen des brevets

(11) **EP 2 909 511 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(21) Anmeldenummer: **13826595.4**

(22) Anmeldetag: **17.10.2013**

(51) Int Cl.:
***F16H 49/00*** *(2006.01)*

(86) Internationale Anmeldenummer:
**PCT/IB2013/059409**

(87) Internationale Veröffentlichungsnummer:
**WO 2014/060975 (24.04.2014 Gazette 2014/17)**

(54) **PIN-RING-ANTRIEB**

PIN RING DRIVE

DÉMULTIPLICATEUR D'ANNEAU À BROCHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2012 PCT/IB2012/055682**

(43) Veröffentlichungstag der Anmeldung:
**26.08.2015 Patentblatt 2015/35**

(60) Teilanmeldung:
**16194747.8 / 3 163 122**

(73) Patentinhaber: **TQ-Systems GmbH
82229 Seefeld (DE)**

(72) Erfinder: **ROSSBERGER, Antonius Georg
82404 Sindelsdorf (DE)**

(74) Vertreter: **Schweiger, Martin
Schweiger & Partners
Intellectual Property Law Firm
Elsenheimer Strasse 1
80687 München (DE)**

(56) Entgegenhaltungen:
**WO-A2-2010/113115     WO-A2-2012/046216**

**Beschreibung**

Die vorliegende Anmeldung beschreibt unter anderem ein neuartiges Pin-Ring-Getriebe, einen Innenring und einen Außenring für ein solches Getriebe sowie ein Zahnprofil, das für dieses Getriebe geeignet ist. Das neuartige Pin Ring Getriebe wird im Folgenden auch als "Harmonic-Pin-Ring-Drive" bezeichnet.

Aus der US 4 032 440 ist ein Getriebe bekannt, das ein flexibles endloses Zahneingriffsband aufweist, das durch eine Bewegung einer Innenverzahnung in die Zähne einer Außenverzahnung gedrückt wird, wobei die Innenverzahnung auf einem Exzenter gelagert ist. Das flexible endlose Zahneingriffsband weist Eingriffselemente auf, die als Pins ausgeformt sind.

Die WO2012/46216 A1 und die WO2010/113115 A2 zeigen in Fig. 41 bis 43 jeweils harmonische Pinring-Getriebe, bei denen ein Innenbereich eines flexiblen Pin-Halterings auf Transmitterscheiben oder auf Kugeln eines Kugellagers aufliegt.

Die vorliegende Erfindung offenbart ein Harmonic-Pin-Ring Getriebe mit mindestens einem Innenring mit Außenverzahnung und mindestens einem Außenring mit Innenverzahnung sowie mit einem Pin-Ring mit Pins, die einen kreisförmigen Querschnitt aufweisen und einen Rotor mit einem Transmitter zum Rakeln der Pins des Pin-Rings in die Zähne des Außenrings und in die Zähne des Innenrings. Der Innenring, der Rotor und der Außenring sind konzentrisch zueinander angeordnet, der Transmitter ist innerhalb des Pinrings angeordnet, und der Transmitter und der Pinring sind zwischen dem Innenring und dem Außenring angeordnet. Der Transmitter verformt den Pinring so, dass sich der Außenring und der Innenring relativ zueinander drehen. Der Pin-Ring weist einen verformbaren Pin-Haltering auf, wobei der Pin-Haltering rillenförmige Vertiefungen mit je einem Grund aufweist, der insbesondere ein kreisabschnittsförmiges Profil haben kann, wobei je ein Pin in je einen Grund lose eingesetzt ist.

Dies bedeutet insbesondere, dass die Pins in die Rillen durch eine Übergangs- oder durch eine Spielpassung eingesetzt sind.

Durch den kreisabschnittsförmigen Grund und dadurch dass die Pins lose eingesetzt sind können sich die Pins innerhalb der Rillen um ihre eigene Achse drehen, so dass Reibungsverluste und Abnutzung verringert werden. Dies steht im Gegensatz zu beispielsweise einem Pin Ring in dem die Pins fest eingefügt oder unter Spannung eingeclipst sind. Insbesondere können die Rillen so ausgeformt sein, dass sich die Pins zwischen dem Grund der Rillen und der inneren Begrenzung der Rillen auf der Innenseite des Pin-Rings radial frei bewegen können. Auf diese Weise ist es zum Beispiel leicht möglich, die Pins auszutauschen.

Insbesondere kann der Grund der Rillen so ausgeformt sein, dass der Radius des Grunds ungefähr gleich einem Radius der Pins ist und er kann so ausgeformt sein, dass der Grund ein halbkreisförmiges Profil hat.

Das Harmonic-Pin-Ring Getriebe kann des Weiteren einen dreireihigen Aufbau mit einem ersten Zahnrad-Paar aus Innenring und Außenring und einem zweiten Zahnrad-Paar aus Innenring und Außenring aufweisen, wobei das erste und das zweite Zahnrad-Paar in voneinander verschiedenen ersten und zweiten Ebenen angeordnet sind, und wobei ein Transmitterträger mit einem Transmitter in einer dritten Ebene zwischen der Ebene des ersten Zahnrad-Paars und der Ebene des zweiten Zahnrad-Paars angeordnet ist. Hierbei kann der Transmitterträger insbesondere ein Rotor sein, und der Transmitter kann insbesondere ein elliptisch ausgeformter Rotorflansch sein.

Für den dreireihigen Aufbau ist die Breite des Pin-Halterings und die Länge der Pins so dimensioniert, dass die Pins an zwei gegenüberliegenden Seiten von dem Pin-Haltering hervorstehen, so dass sie in die Zahnräder der ersten und zweiten Ebene eingreifen können. Vorteilhafterweise erstreckt sich der Pin-Haltering nicht bis in den oder die Zwischenräume zwischen Innen- und Außenring sondern ist in einer Ebene angeordnet, die sich außerhalb der Ebene eines Paars von Innen- und Außenring befindet. Gemäß der vorliegenden Anmeldung ist ein Innenrad auch als Innenring zu verstehen.

Zwischen zwei benachbarten Gründen der rillenförmigen Vertiefungen können jeweils längliche Erhebungen angeordnet sein, wobei eine Höhe der länglichen Erhebungen ungefähr gleich einem Radius der Pins ist. Durch die Erhebungen werden die Pins seitlich gehalten, wobei eine radiale Bewegung der Pins durch die Höhe der Erhebungen eingeschränkt ist, wenn der Pinring auf einem flexiblen Kugellager aufliegt.

Der Pin Ring kann aus mehreren Bestandteilen gefertigt sein. Insbesondere kann der Pin-Haltering einen inneren Bereich aufweist, der die rillenförmigen Vertiefungen aufweist, und einen äußeren Bereich, der sich radial nach außen an den inneren Bereich anschließt. Für den inneren und äußeren Bereich kann dann das jeweils am besten geeignete Material gewählt werden.

Des Weiteren kann der Pin-Haltering aus zwei baugleichen Hälften zusammengesetzt sein, wobei die beiden baugleichen Hälften jeweils einen inneren Bereich und einen äußeren Bereich aufweisen können, wobei der innere Bereich die rillenförmigen Vertiefungen aufweist und wobei sich der äußere Bereich radial nach außen an den inneren Bereich anschließt.

Der Harmonic-Pin-Ring-Drive (HPRD) gemäß der vorliegenden Anmeldung ist ein spezielles, rotationssymmetrisch aufgebautes Getriebe, das sich insbesondere durch folgende Merkmale auszeichnet:

- sehr hohe Leistungsdichte, dadurch kleiner Bauraum
- Steifigkeit
- mit sehr geringem Spiel
- sehr große Bandbreite hinsichtlich Unter- bzw. Übersetzungen
- Hohlwellenbauform möglich

Diese Getriebe können sowohl einstufige als auch mehrstufige Drehzahländerungen abbilden und können als Ausgleichsgetriebe verwendet werden. Des Weiteren sind auch Drehrichtungsänderungen und Schaltungen möglich.

Der Gegenstand der Anmeldung wird untenstehend unter Bezugnahme auf die folgenden Figuren weiter erläutert.

Figur 1      zeigt eine Explosionsansicht eines HPRD Getriebes,
Figur 2      zeigt eine Aufsicht auf das Getriebe von Fig. 1,
Figur 3      zeigt einen Querschnitt durch das Getriebe von Fig.1,
Figur 4      zeigt eine Seitenansicht eines Pin-Rings und eine Ausschnittvergrößerung davon,

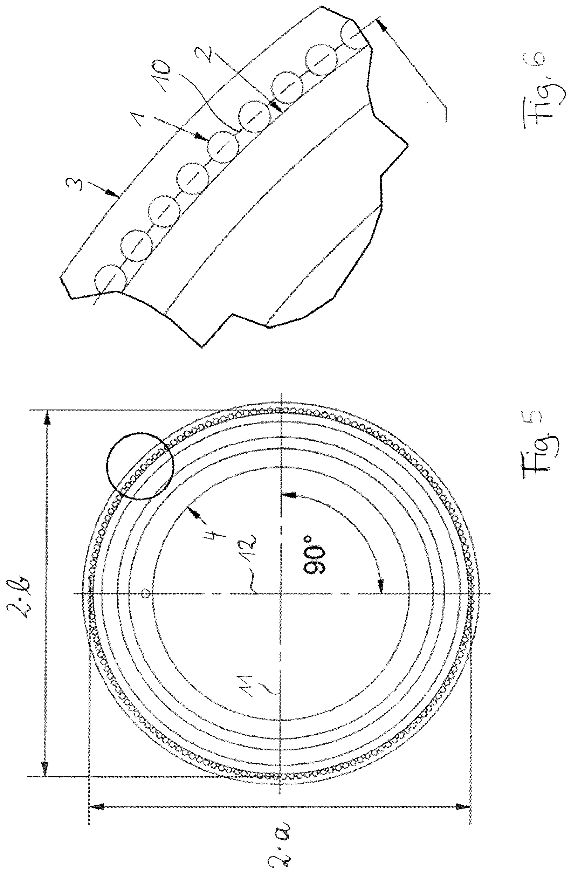

Figur 5      zeigt eine Pin-Laufbahn eines HPRD Getriebes,
Figur 6      zeigt einen vergrößerten Ausschnitt von Fig. 5,
Figur 7      zeigt eine Anordnung mit einem ersten Pin-Haltering,
Figur 8      zeigt einen Ausschnitt von Fig. 7,
Figur 9      zeigt eine Aufsicht auf den Pin-Halterring von Fig. 7 mit eingesetzten Pins,
Figur 10     zeigt eine Seitenansicht einer Hälfte des Pin-Halterings von Fig. 7,
Figur 11     zeigt eine perspektivische Ansicht der Hälfte des Pin-Halterrings von Fig. 10,
Figur 12     zeigt einen Schnitt durch die Hälfte des Pin-Halterings,
Figur 14     zeigt eine Explosionszeichnung einer Anordnung mit einem zweiten Pin-Haltering,
Figur 15     zeigt eine Seitenansicht der Anordnung von Fig. 14,
Figur 16     zeigt einen Schnitt durch die Anordnung von Fig. 14,
Figur 17     zeigt eine Seitenansicht auf den Pin-Haltering von Fig. 14,
Figur 18     zeigt eine perspektivische Ansicht des Pin-Halterings von Fig. 14, und
Figur 19     zeigt eine Ausschnittvergrößerung des Pin-Halterings von Fig. 17.

Ein Transmitter, der ein Zugmittel in ein Außenrad bzw. Außenring oder Innenrad bzw. Innenring rakelt, ist in der vorliegenden Anmeldung durch einen Flansch eines Rotors oder auch durch ein Paar von Umlenkrollen verwirklicht. Dem Außenrad entsprechen ein oder mehrere Ringe bzw. Scheiben mit einer als Innenverzahnung ausgeführten äußeren Verzahnung. Dem Innenrad entsprechen ein oder mehrere Ringe bzw. Scheiben mit einer als Außenverzahnung ausgeführten inneren Verzahnung. Dem Zugmittel entspricht ein Pinring.

Im Folgenden ist mit "Antriebsseite" die Seite gemeint, von der aus der Rotor 13 angetrieben wird und mit "Abtriebsseite" die der Antriebsseite gegenüberliegende Seite.

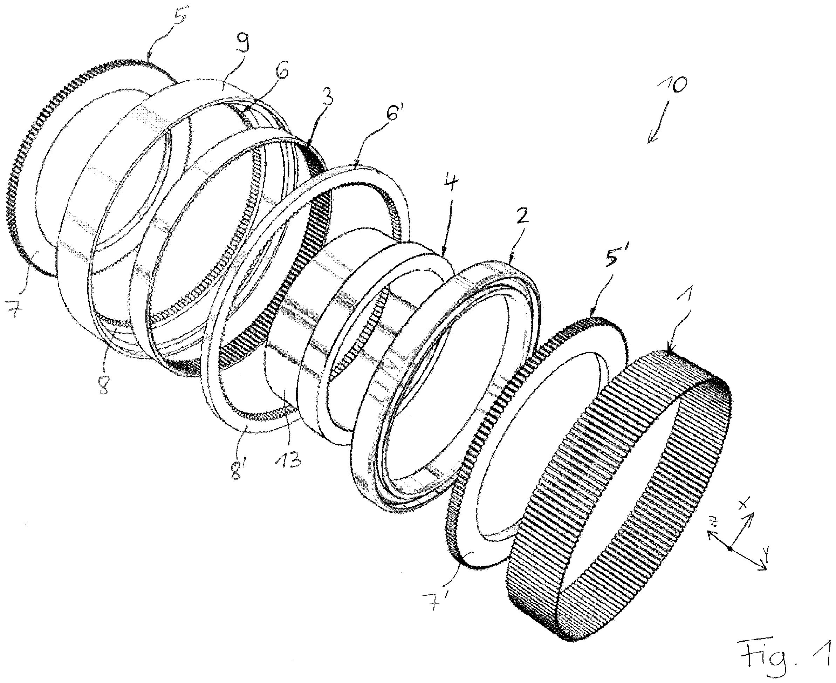

Figur 1 zeigt einen Harmonic Pin Ring Drive (HPRD) 10 gemäß der Anmeldung. Der HPRD weist einen Rotor 13 auf der über ein hier nicht gezeigtes Kugellager auf einem Gehäuse abgestützt ist. Ein Außenring 8 eines zylindrisches Gehäuseteil 9, das konzentrisch außerhalb des Rotors 13 angeordnet ist, weist eine erste als Innenverzahnung ausgeformte äußere Verzahnung 6 auf einer ersten Seite auf. Eine zweite als Innenverzahnung ausgeformte äußere Verzahnung 6' ist auf einem zweiten Außenring ausgeformt, der auf einer der ersten Seite gegenüberliegenden Seite in das zylindrische Gehäuseteil 9 eingesetzt ist.

Eine als Außenverzahnung ausgeführte erste innere Verzahnung 5 ist auf einer Peripherie eines Innenrings 7 ausgeformt und konzentrisch innerhalb der ersten äußern Verzahnung 6 angeordnet. In ähnlicher Weise ist eine als Außenverzahnung ausgeführte zweite innere Verzahnung 5' auf einer Peripherie eines zweiten Innenrings 7' ausgeformt und konzentrisch innerhalb der zweiten äußeren Verzahnung 6' angeordnet

Die innere Verzahnung 5, 5' und die äußere Verzahnung 6, 6' sind konzentrisch zu einer Getriebemittelachse angeordnet, wobei die innere Verzahnung 5, 5' um die Getriebemittelachse rotierbar ist. In anderen Ausführungsbeispielen kann die äußere Verzahnung 6, 6' oder auch die äußere und die innere Verzahnung um die Getriebemittelachse rotierbar sein, je nachdem über welche Verzahnung der Abtrieb oder, bei einer Übersetzung, der Antrieb erfolgt.

Ein flexibles Dünnring-Kugellager 2 ist auf einem speziell ausgeformten Flansch 4 des Rotors 13 aufgespannt. Der Flansch kann beispielsweise als Oval oder als sinusüberlagerte Kreisform ausgeformt sein. Ein flexibler Pin-Haltering 3 ist zwischen dem flexiblen Dünnring-Kugellager 2 und der äußeren Verzahnung 6, 6' angeordnet. Der flexible Pin-Haltering 3 weist an einer Innenseite Rillen zur Aufnahme von Pins 1 auf, die auf dem Pin-Haltering 3 in gleichmäßigen Abständen angeordnet und durch den Pin-Haltering 3 starr gehalten sind.

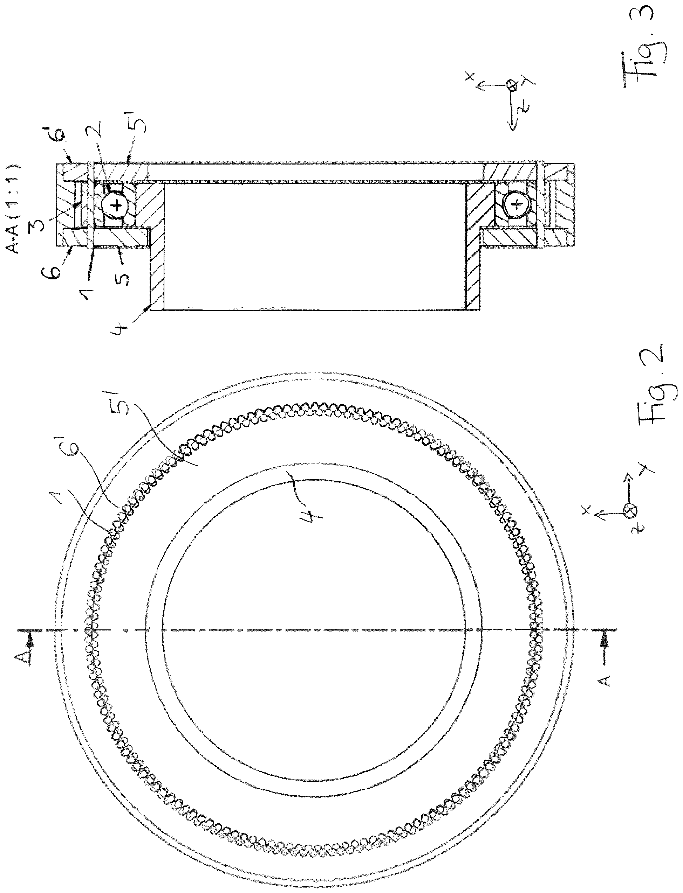

Fig. 2 zeigt eine Aufsicht auf das HPRD 10 von einer Abtriebsseite her und Fig. 3 zeigt einen Querschnitt durch den HPRD 10 entlang der Querschnittline A-A.

Die erste innere Verzahnung 5 ist durch ein Kugellager auf dem Rotor 13 abgestützt, dass der Einfachheit halber in Fig. 2 und 3 nicht gezeigt ist. Die zweite innere Verzahnung 5' ist an hier ebenfalls nicht gezeigte Abtriebsachse befestigt, die nach außen über Kugellager abgestützt ist. Die äußere Verzahnung 6, 6' ist stationär an einem hier nicht gezeigten Gehäuse befestigt.

Gemäß einer anderen Ausführungsform ist die innere Verzahnung 5, 5' stationär während die äußere Verzahnung 6, 6' einen Abtrieb bildet. Gemäß einer weiteren Ausführungsform bilden sowohl die innere Verzahnung 5, 5' als auch die äußere Verzahnung 6, 6' je einen Abtrieb.

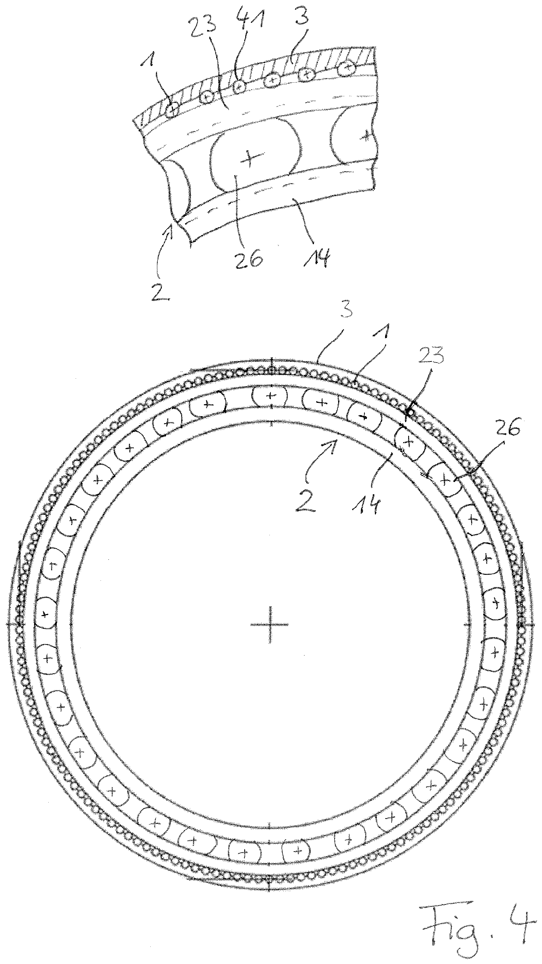

Figur 4 zeigt das flexible Kugellager 2 und den Pin-Haltering 3 mit den Pins 1. Der Pin-Haltering zusammen mit den Pins 1 wird auch als Pin-Ring bezeichnet. Das flexible Dünnring-Kugellager weist einen flexiblen Innenring 14, einen flexiblen Außenring 23 und dazwischen angeordnete Kugeln 26 auf.

Die Pins 1 sind in Aufnahmerillen 41 des Pin-Halterings 3 eingesetzt und werden durch den Anpressdruck des Pin-Halterings 3 gegen das Dünnring-Kugellager 2 festgehalten. Ein manueller Zusammenbau kann zum Beispiel so erfolgen, dass zuerst der Pin-Haltering um das Dünnring-Kugellager 2 herumgelegt wird. Anschließend werden an weit auseinanderliegenden Positionen Pins 1 eingesteckt, so dass der Abstand zwischen Dünnring-Kugellager 2 und Pin-Haltering 3 definiert wird. Anschließend werden die restlichen Pins in die Zwischenräume eingefüllt.

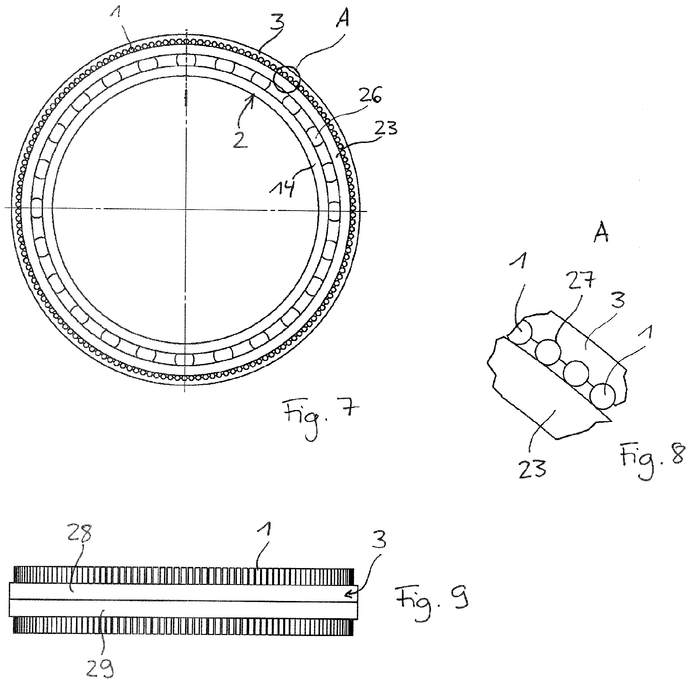

Die Figuren 7 und 8 illustrieren eine Pin-Laufbahn 10 und daraus abgeleitete Beziehungen. Von der Pin-Laufbahn 10 zu unterscheiden ist die Pintrajektorie, die die Bewegung eines einzelnen Pins in einem vorher festgelegten Bezugssystem bezeichnet. Für ein mit dem Rotor 4 mitrotierendes Bezugssystem verläuft die Pintrajektorie entlang der Pin-Laufbahn 10. In den Figuren 7 und 8 sind aus Gründen der Übersichtlichkeit die Zähnungen nicht gezeigt.

Legt man eine Bahn durch die Mittelachsen aller Pins (2), entsteht die Pin-Laufbahn 10. Diese Bahn besitzt rechtwinklig versetzt eine kleine Achse 11 der Länge 2b und eine große Achse 12 der Länge 2a. Bei einer Ellipsenform des Transmitters ist a die Länge der kleinen Halbachse und b die Länge der großen Halbachse der Ellipse.

Die kleine Achse und die große Achse bilden die Basis der Teilkreise der Verzahnungen 5, 5' und 6, 6', wobei die kleine Achse einem Durchmesser eines Teilkreises der inneren Verzahnung 5, 5' und die große Achse einem Durchmesser eines Teilkreises der äußeren Verzahnung 6 entspricht. Bei dem HPRD verläuft der Teilkreis einer Zähnung durch die Flankenlinien, die die Zahnflanken von dem Zahngrund abgrenzen. Unter Annahme bestimmter Zahnformen der Verzahnungen 5, 5' und 6, 6' lässt sich nun die Getriebefunktion abbilden.

Hält man beispielsweise die Innenverzahnung 5, 5' stationär und dreht den Rotor 13, so entsteht eine Wellenbewegung der Anordnung der Pins 1. Daraus resultiert eine Relativbewegung der äußeren Verzahnung 6, 6', welche sich in gleicher Drehrichtung relativ zu dem Rotor 13 untersetzt dreht. Hält man die äußere Verzahnung 6, 6' stationär, dreht sich die innere Verzahnung 5, 5' entgegengesetzt und untersetzt zum Rotor 13.

Die Anzahl aller Pins 1 muss um zwei mehr als Anzahl der Zähne der inneren Verzahnung 5, 5', bzw. um zwei weniger als die Anzahl der Zähne der äußeren Verzahnung 6, 6' sein. Die Zahndifferenz der Verzahnungen 5, 5' und 6, 6' ist somit vier. Grundsätzlich wären auch Zahndifferenzen eines Vielfachen von vier möglich.

Im den folgenden Gleichungen (1) - (3) bezeichnet R die Umlaufperiode des Rotors 13, F die Umlaufperiode des Flexabtriebs 7, A die Umlaufperiode des Außenrads, I die Umlaufperiode des Innenrads, Zi die Anzahl der Zähne der Innenverzahnung 5, 5', Za die Anzahl der Zähne der äußeren Verzahnung 6, 6'. Gemäß der Gleichungen (1) - (3) sich die Drehzahluntersetzungen zwischen den einzelnen Komponenten wie folgt zusammen:

Wenn das Innenrad stationär gehalten wird, gilt

$$A/R = Za/(Za-Zi) \quad bzw. \quad F/R = 2*(Za/(Za-Zi)) \qquad (1)$$

Hierbei drehen sich alle Elemente gleichläufig.

Wenn das Außenrad stationär gehalten wird, gilt

$$I/R = Zi/(Za-Zi) \quad bzw. \quad F/R = 2*(Zi/(Za-Zi)) \qquad (2)$$

Hierbei drehen sich das Innenrad und der Flexring gegenläufig zum Rotor.

Wenn der Flexring stationär gehalten wird, gilt

$$A/R = 2*(Za/(Za-Zi)) \quad bzw. \quad I/R = 2*(Zi/(Za-Zi)) (3)$$

Hierbei drehen sich das Innenrad gegenläufig und das Außenrad gleichläufig zum Rotor.

Im Folgenden nun eine Beispielberechnung zu den möglichen Untersetzungsstufen, wobei in diesem Fall der Rotor 13 immer die Eingangsdrehzahl vorgibt. Die Zähnezahl der Innenverzahnung sei 156 und die Zähnezahl der Außenverzahnung sei 160, woraus sich die Anzahl der Pins zu 158 ergibt.

Wenn das Innenrad stationär gehalten wird, gilt

$$A/R = 160/(160-156) = 40 \text{ bzw. } F/R = 2*(160/(160-156)) = 80$$

Wenn das Außenrad stationär gehalten wird, gilt

$$I/R = 156/(160-156) = 39 \text{ bzw. } F/R = 2*(156/(160-156)) = 78$$

Wenn der Flexring stationär gehalten wird, gilt

$$A/R = 2*(160/(160-156)) = 80 \text{ bzw. } I/R = 2*(156/(160-156)) = 78$$

Es gibt verschiedene Möglichkeiten, die Pin-Laufbahn zu definieren. Grundsätzlich besitzt jede Pin-Laufbahn, wie oben beschrieben, jeweils rechtwinklig versetzt eine kleine Achse x und eine große Achse y, deren Verhältnis dem der Zähnezahlen der Verzahnungen 5, 5' und 6, 6' entspricht.

$$\text{Somit gilt} \quad x/y = Zi/Za$$

Des Weiteren muss die Teilung der in den Pin-Haltering 3 eingesetzten Anordnung der Pins 1 der Teilung der Verzahnungen 5, 5' und 6, 6' entsprechen. Die Pin-Laufbahn ist somit auch über ihre Bogenlänge definiert. Für die Bogenlänge s jeder beliebigen Pin-Laufbahn gilt:

$$s = \text{Anzahl Pins } 1 * \text{Teilung}$$

Der Umfang der Pin-Laufbahn abzüglich des Umfangs eines Pins 1 muss also exakt dem Umfang des Kugellagers 2 entsprechen.

Im Folgenden werden drei Laufbahnvarianten dargestellt:

1. Die Elliptische Laufbahn wird durch ihre beiden Halbachsen definiert, wobei die kleine Halbachse dem Teilkreisradius der Innenverzahnung 5, 5' und die große Halbachse dem Teilkreisradius der Außenverzahnung 6, 6' entspricht

2. Die sinusüberlagerte Kreisform ist der elliptischen Laufbahn sehr ähnlich und unterscheidet sich bei kleinen Achsunterschieden nur äußerst gering von dieser. Sie ist folgendermaßen definiert: Die Mittelachse eines kleinen Kreises mit Durchmesser gemäß dem halben Wert der Differenz aus große Achse minus kleine Achse rotiert auf der großen Kreisbahn des Mittelkreises zwischen den beiden Teilkreisen der Verzahnungen 5, 5' und 6, 6' und dreht sich dabei während eines Umlaufs um die Getriebemittelachse zweimal um seine eigene Achse. Projiziert man einen Punkt des kleinen Kreises und leitet daraus eine Bahn ab, entsteht die sinusüberlagerte KreisForm.

3. Die Doppelexzenter-Laufbahn ist eine Sonderform, die beispielsweise eingesetzt werden kann, wenn ein elastisches Verformen des Kugellagers 2 unerwünscht oder aufgrund eines zu großen Unterschiedes der beiden Achsen der Pin-Laufbahn nicht mehr möglich ist. In diesem Fall wird die Anordnung der Pins 1 über zwei Umlenkrollen vom Teilkreis der Innenverzahnung 5, 5' in den Teilkreis der Außenverzahnung 6, 6' gelenkt. Die Drehachsen der beiden Umlenkrollen befinden sich bezüglich einer gedachten Ellipse symmetrisch zur kleinen Achse auf der großen Achse.

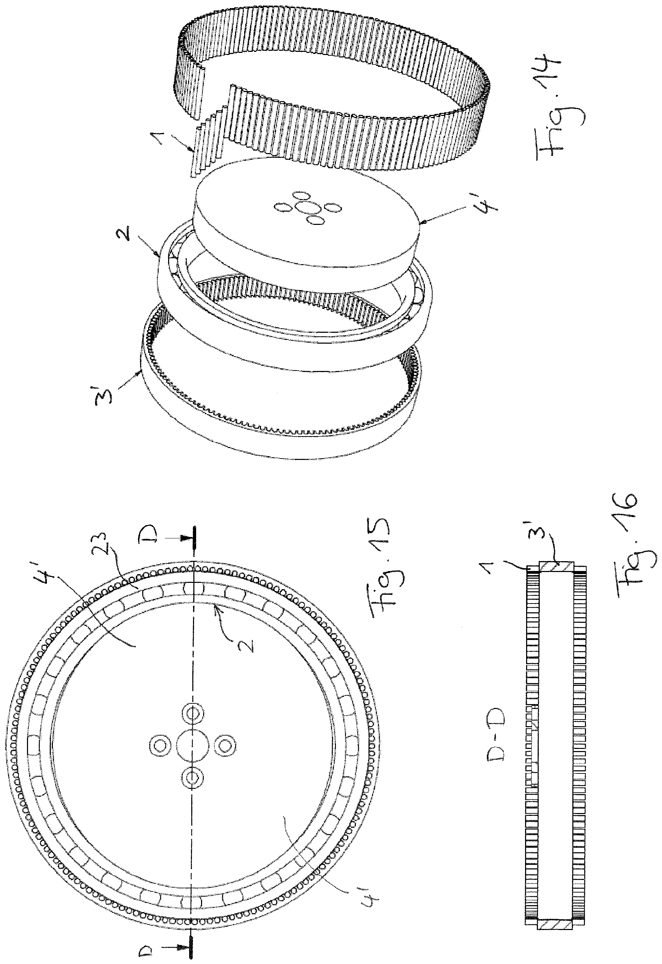

Ein erster Pin Haltering 3 gemäß der vorliegenden Anmeldung ist in den Figuren 7 bis 13 gezeigt und ein zweiter Pin-Haltering 3' gemäß der vorliegenden Anmeldung ist in den Figuren 14 bis 19 gezeigt.

Fig. 7 zeigt eine Anordnung mit einem Pin-Haltering 3, der konzentrisch außerhalb des flexiblen Kugellagers 2 angeordnet ist. Zwischen dem Pin-Haltering 3 und dem flexiblen Kugellager 2 befinden sich Pins 1, die an einer Seite auf einem Außenring 23 des flexiblen Kugellager aufliegen und auf einer gegenüberliegenden Seite in rillenförmige Vertiefungen des Pin-Halterings 3 eingesetzt sind.

Wie in der Ausschnittvergrößerung A von Fig. 8 gezeigt, haben die rillenförmigen Vertiefungen 27 des Pin-Halterings 3 ein halbkreisförmiges Profil, so dass die Pins 1 ungefähr zur Hälfte in den rillenförmigen Vertiefungen 27 aufgenommen sind. Fig. 9 zeigt eine Aufsicht auf den Pin-Halterring 3 von Fig. 7 mit eingesetzten Pins. Der Pin-Haltering 3 besteht aus einer ersten Hälfte 28 und einer dazu symmetrischen zweiten Hälfte 29, die miteinander verbunden sind, beispielsweise über Verschweißen oder Verkleben.

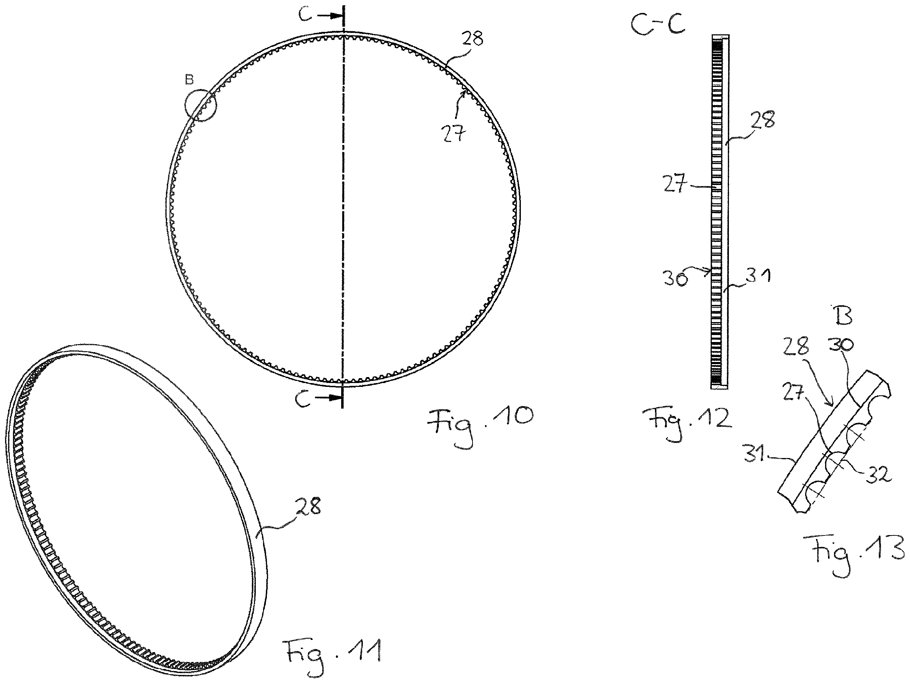

Fig. 10 zeigt eine Seitenansicht der Hälfte 28 des Pin-Halterings 3, die baugleich zur Hälfte 29 des Pin-Halterings 3 ist und Fig. 11 zeigt eine perspektivische Ansicht der Hälfte 28. Wie in der Schnittansicht C-C von Fig. 12 gezeigt, besteht die Hälfte 28 des Pin-Halterings aus einem inneren Bereich 30, der die rillenförmigen Vertiefungen 27 aufweist und einem seitlich überstehenden äußeren Bereich 31. Der innere Bereich 30 und der äußere Bereich 31 sind ebenfalls in der Ausschnittvergrößerung B in Fig. 13 gezeigt. Durch den inneren Berührkreis 32 an die halbkreisförmigen Vertiefungen 27 ist ein Teilkreis des Pin-Halterings 3 definiert. Der in Fig. 13 angedeutete Radius der halbkreisförmigen Vertiefungen 27 ist ungefähr gleich dem Radius der Pins 1.

Figur 14 zeigt eine Explosionszeichnung mit einem scheibenförmigem Transmitter 4' mit ovalem Querschnitt, einem von außen daran anschließenden flexiblen Kugellager 2, den Pins 1 und einem zweiten Pin-Haltering 3'.

Wie in Fig. 15 gezeigt liegt der zweite Pin-Haltering 3' und die Pins 1 auf dem Außenring 23 des flexiblen Kugellagers 2 auf. Das flexible Kugellager 4' ist entlang der Linie D-D geringfügig nach außen deformiert und entlang einer dazu senkrechten Linie durch den Mittelpunkt des Transmitters 4' geringfügig von dem Transmitter 4' abgehoben.

Fig. 16 zeigt einen Querschnitt D-D, wobei der Übersichtlichkeit halber die innerhalb der Pins 1 liegenden Teile weggelassen sind. Wie in Fig. 16 erkennbar ist die Dicke des Pin-Halterings 3' in radialer Richtung ungefähr gleich dem doppelten Durchmesser der Pins 1.

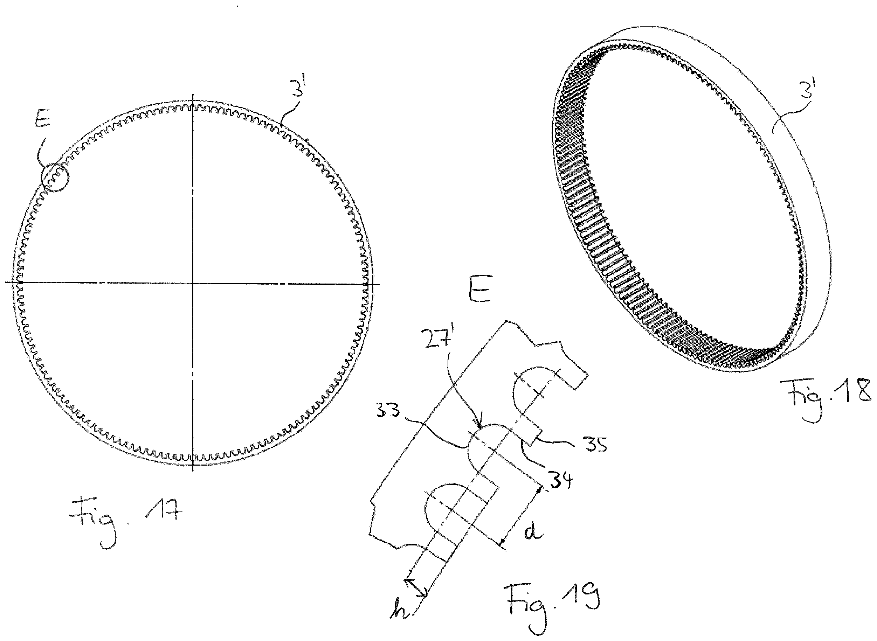

Fig. 17 zeigt eine Seitenansicht auf den Pin-Haltering 3' und Fig. 17 eine perspektivische Ansicht auf den Pin-Haltering 3'. Anders als in dem Ausführungsbeispiel der Figuren 7 - 13 besteht der Pin Haltering 3' aus einem Stück und nicht aus einem inneren und einem äußeren Bereich oder aus zwei Hälften. In einer modifizierten Ausführung kann der Pin-Haltering 3' in ähnlicher Weise wie der Pin-Haltering 3 aus einem inneren und äußeren Bereich und/oder aus zwei Hälften gefertigt sein, die miteinander verbunden sind.

Wie in Fig. 19 gezeigt, weisen die rillenförmigen Vertiefungen 27' des Pin-Halterings 3' Bereiche 33 mit halbkreisförmigen Querschnitt und daran anschließende Wände 34 auf, die durch längliche Erhebungen 34 gebildet werden, die sich von einer Seite des Pin-Halterings 3' zu einer gegenüberliegenden Seite des Pin-Halterings 3' erstrecken und sich zwischen den halbkreisförmigen Bereichen 33 befinden. Eine Höhe h der Erhebungen 34 ist ungefähr gleich oder auch geringfügig kleiner als der Radius der Pins 1. Ein Radius der halbkreisförmigen Bereiche 33 ist ungefähr gleich dem Radius der Pins 1.

**Bezugsziffern**

| | |
|---|---|
| 1 | Pins |
| 2 | Dünnring-Kugellager |
| 3 | Pin-Haltering |
| 4 | Rotor-Flansch, Transmitter |
| 5 | innere Verzahnung |
| 5' | innere Verzahnung |
| 6 | äußere Verzahnung |
| 6' | äußere Verzahnung |
| 7 | Innenring |
| 7' | Innenring |
| 8 | Außenring |
| 8' | Außenring |
| 9 | zylindrisches Gehäuseteil |
| 10 | HPRD Getriebe |
| 11 | kleine Achse |
| 12 | große Achse |
| 13 | Rotor |
| 14 | flexibler Innenring |

15 Umlenkrolle
15' Umlenkrolle
16 Kugellager
17 Kugellager
18 Scheibe, Innenring
19 Stellschlitze
20 innerer Berührbereich
21 äußerer Berührbereich
22 Zwischenbereich
23 flexibler Außenring
24 Zahngrund
25 Pintrajektorie
26 Kugellagerkugeln
27 rillenförmige Vertiefung
28 erste Hälfte des Pin-Halterings
29 zweite Hälfte des Pin-Halterings
30 innerer Bereich des Pin-Halterings
31 äußerer Bereich des Pin-Halterings
32 Teilkreis des Pin-Halterings
33 Grund der Vertiefung
34 Wand der Vertiefung
35 längliche Erhebung

**Patentansprüche**

1. Harmonic-Pin-Ring Getriebe (10), das aufweist

  - mindestens einen Innenring (7, 7') mit Außenverzahnung (5,5') und
  - mindestens einen Außenring (8, 8') mit Innenverzahnung (6, 6'),
  - einen Pin-Ring (1, 3) mit Pins (1), die einen kreisförmigen Querschnitt aufweisen,
  - einen Rotor (13) mit einem Transmitter (4, 4') zum Rakeln der Pins des Pin-Rings in die Zähne des Außenrings (8, 8') und in die Zähne des Innenrings (7, 7'),

  wobei der Innenring (7, 7'), der Rotor (13) und der Außenring (8, 8') konzentrisch zueinander angeordnet sind, wobei der Transmitter (4, 4') innerhalb des Pinrings (1, 3) angeordnet ist, und wobei der Transmitter (4, 4') und der Pinring (1, 3) zwischen dem Innenring (8, 8') und dem Außenring (7, 7') angeordnet sind, wobei der Transmitter (4, 4') den Pinring (1, 3) so verformt, dass sich der Außenring (8, 8') und der Innenring (7, 7') relativ zueinander drehen, wobei der Pin-Ring (1, 3) einen verformbaren Pin-Haltering (3) aufweist, wobei der Pin-Haltering (3) rillenförmige Vertiefungen (27) mit je einem Grund (33) aufweist, in den die Pins auf einer Seite lose eingesetzt sind, **gekennzeichnet durch** ein flexibles Dünnring-Kugellager (2), das in radialer Richtung zwischen dem Transmitter und dem Pinring (1, 3) angeordnet ist, und wobei die Pins (1) an der gegenüberliegenden Seite auf einem Außenring des flexiblen Dünnring-Kugellagers (2) aufliegen.

2. Harmonic-Pin-Ring Getriebe (10) gemäß Anspruch 1, wobei der Radius des Grunds (33) im Wesentlichen gleich einem Radius der Pins (1) ist.

3. Harmonic-Pin-Ring Getriebe (10) gemäß Anspruch 1 oder Anspruch 2, wobei der Grund (33) ein halbkreisförmiges Profil hat.

4. Harmonic-Pin-Ring Getriebe (10) gemäß einem der vorhergehenden Ansprüche, wobei zwischen je zwei Gründen (33) der rillenförmigen Vertiefungen (27) längliche Erhebungen (35) angeordnet sind.

5. Harmonic-Pin-Ring-Getriebe (10) gemäß Anspruch 4, wobei eine Höhe der länglichen Erhebungen (35) ungefähr gleich einem Radius der Pins (1) ist.

6. Harmonic-Pin-Ring Getriebe (10) gemäß einem der vorhergehenden Ansprüche, wobei der Pin-Haltering (3) einen inneren Bereich aufweist, der die rillenförmigen Vertiefungen (27) aufweist, und einen äußeren Bereich, der sich radial nach außen an den inneren Bereich anschließt.

7. Harmonic-Pin-Ring Getriebe (10) gemäß einem der vorhergehenden Ansprüche, wobei der Pin-Haltering (3) zwei baugleiche Hälften (28, 29) aufweist.

8. Harmonic-Pin-Ring Getriebe (10) gemäß Anspruch 7, wobei die beiden baugleichen Hälften (28, 29) je einen inneren Bereich und einen äußeren Bereich aufweisen, wobei der innere Bereich die rillenförmigen Vertiefungen (27) aufweist und wobei sich der äußere Bereich radial nach außen an den inneren Bereich anschließt.

**Claims**

1. Harmonic pin ring gear (10), comprising

   - at least one inner ring (7, 7') with an external toothing (5,5') and
   - at least one outer ring (8, 8') with an internal toothing (6, 6'),
   - a pin ring (1, 3) with pins (1) that comprise a circular cross section,
   - a rotor (13) with a transmitter (4, 4') for dragging the pins of the pin ring into the teeth of the outer ring (8, 8') and into the teeth of the inner ring (7, 7'),

   wherein the inner ring (7, 7'), the rotor (13) and the outer ring (8, 8') are arranged concentrically with respect to each other, wherein the transmitter (4, 4') is arranged within the pin ring (1, 3), and wherein the transmitter (4, 4') and the pin ring (1, 3) are arranged between the inner ring (8, 8') and the outer ring (7, 7'), wherein the transmitter (4, 4') deforms the pin ring such that the outer ring (8, 8') and the inner ring (7, 7') turn relative to each other, wherein the pin ring (1, 3) comprises a deformable pin retaining ring (3), wherein the pin retaining ring (3) comprises groove-shaped recesses (27) with a respective ground (33), in which the pins (1) are loosely inserted on one side, **characterized by** a flexible thin section ball bearing (2), which is arranged in radial direction between the transmitter and the pin ring (1, 3), and wherein the pins (1) rest at the opposite side on an outer ring of the flexible thin section ball bearing (2).

2. Harmonic pin ring gear (10) according to claim 1, wherein the radius of the ground (33) is essentially equal to the radius of the pins (1).

3. Harmonic pin ring gear (10) according to claim 1 or claim 2, wherein the ground (33) has a semicircular profile.

4. Harmonic pin ring gear (10) according to one of the preceding claims, wherein elongated elevations (35) are provided between two respective grounds (33) of the groove shaped recesses (27).

5. Harmonic pin ring gear (10) according to claim 4, wherein a height of the longitudinal elevations (35) is approximately equal to a radius of the pins (1).

6. Harmonic pin ring gear (10) according to one of the preceding claims, wherein the pin retaining ring (3) comprises an inner region, which comprises the groove shaped recesses (27), and an outer region, which is radially outwards adjacent to the inner region.

7. Harmonic pin ring gear (10) according to one of the preceding claims, wherein the pin retaining ring (3) comprises two identically constructed halves (28, 29).

8. Harmonic pin ring gear (10) according to claim 7, wherein the two identically constructed halves (28, 29) respectively comprise an inner region and an outer region, wherein the inner region comprises the groove shaped recesses (27), and wherein the outer region is radially outwards adjacent to the inner region.

**Revendications**

1. Entraînement harmonique d'anneau à broches (10) qui comprend

- au moins un anneau intérieur (7, 7') avec denture extérieure (5, 5') et
- au moins un anneau extérieur (8, 8') avec denture intérieure (6, 6'),
- un anneau à broches (1, 3) avec des broches (1) qui comprennent une section transversale circulaire,
- un rotor (13) avec un moyen d'entraînement (4, 4') pour entraîner les broches de l'anneau externe (8, 8') vers les dents de l'anneau extérieur et vers les dents de l'anneau intérieur (7, 7'),

dans lequel l'anneau intérieur (7, 7'), le rotor (13) et l'anneau extérieur (8, 8') sont arrangés concentriquement l'un par rapport à l'autre, dans lequel le moyen d'entraînement (4, 4') est arrangé dedans l'anneau à broches (1, 3), et dans lequel le moyen d'entraînement (4, 4') et l'anneau à broches (1, 3) sont arrangés entre l'anneau intérieur (8, 8') et l'anneau extérieur (7, 7'), dans lequel le moyen d'entraînement (4, 4') déforme l'anneau à broches (1, 3) de sorte que l'anneau extérieur (8, 8') et l'anneau intérieur (7, 7') tournent l'un par rapport à l'autre, dans lequel l'anneau à broches (1, 3) comprend un anneau de maintien de broches (3) déformable, dans lequel l'anneau de maintien de broches (3) comprend des encoches en forme de rainure (27) avec des fonds respectifs (33), dans lesquelles les broches (1) sont insérées de façon lâche à un côté,

**caractérisé par** un roulement à billes flexible à section mince (2), qui est arrangé dans une direction radiale entre le moyen d'entraînement et l'anneau à broches (1, 3), et dans lequel les broches (1) reposent au côté opposé sur un bague extérieur (23) du roulement à billes flexible à section mince (2).

2. Entraînement harmonique d'anneau à broches (10) selon revendication 1, dans lequel le radius du fond (33) est essentiellement égal à un radius des broches (1).

3. Entraînement harmonique d'anneau à broches (10) selon revendication 1 ou 2, dans lequel le fond (33) a un profil de forme semi-circulaire.

4. Entraînement harmonique d'anneau à broches (10) selon une des revendications précédentes, dans lequel des protubérances oblongues (35) sont arrangées entre chaque deux fonds (33) des encoches en forme de rainure (27).

5. Entraînement harmonique d'anneau à broches (10) selon revendication 4, dans lequel la hauteur des protubérances oblongues (35) est à peu près égale à un radius des broches (1).

6. Entraînement harmonique d'anneau à broches (10) selon une des revendications précédentes, dans lequel l'anneau à broches comprend une région intérieure, qui comprend les encoches en forme de rainure (27), et une région extérieure qui se rejoint à la région intérieure vers l'extérieur dans une direction radiale.

7. Entraînement harmonique d'anneau à broches (10) selon une des revendications précédentes, dans lequel l'anneau de maintien de broches (3) comprends deux moitiés (28, 29) de construction identique.

8. Entraînement harmonique d'anneau à broches (10) selon revendication 7, dans lequel les deux moitiés (28, 29) de construction identique comprennent respectivement une région intérieure et une région extérieure, dans lequel la région intérieure comprend des encoches en forme de rainure (27), et une région extérieure qui se rejoint à la région intérieure vers l'extérieur dans une direction radiale.

Fig. 1

EP 2 909 511 B1

10

Fig. 2

Fig. 3

A-A ( 1 : 1 )

EP 2 909 511 B1

Fig. 4

Fig. 5

Fig. 6

EP 2 909 511 B1

Fig. 8

Fig. 7

Fig. 9

Fig. 13

Fig. 12

Fig. 10

Fig. 11

Fig. 14

Fig. 15

Fig. 16

EP 2 909 511 B1

E

3'

Fig. 17

E

27'

33

35

34

d

h

Fig. 18

3'

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4032440 A
- WO 201246216 A1
- WO 2010113115 A2